# EUROPEAN PATENT SPECIFICATION

(11) **EP 2 227 642 B1**
(45) Date of publication and mention of the grant of the patent: **12.12.2018**
(21) Application number: 07851961.8
(22) Date of filing: 24.12.2007
(51) Int. Cl.: F16G 5/16

(54) **DRIVE BELT**
ANTRIEBSRIEMEN
COURROIE D'ENTRAÎNEMENT

(43) Date of publication of application: 15.09.2010
(73) Proprietor: Robert Bosch GmbH, 70442 Stuttgart (DE)
(72) Inventor: VAN DER MEER, Cornelis Johannes Maria, NL-5032 XG Tilburg (NL); FAES, Paulus Adrianus Josephus Maria, NL-5045 ZH Tilburg (NL); JONKERS, Joost Johannes Cornelis, NL-5126 BH Gilze (NL)
(74) Representative: Plevier, Gabriel Anton Johan Maria
(86) International application number: PCT/NL2007/050701
(87) International publication number: WO 2009/082196

(56) References cited:
- EP-A- 0 014 014
- EP-A- 1 371 876
- EP-A- 1 544 502
- EP-A- 1 566 567
- JP-A- 58 124 847
- JP-A- 61 160 645
- JP-A- 2004 150 569
- JP-Y2- 2 000 513
- US-A- 4 526 559
- US-A- 4 533 342

## Description

The present invention relates to a drive belt as defined in the preamble of claim 1. Such a drive belt is, for instance, known from the European patent publication EP-A-0976949, which known belt is composed of a number of relatively thin metal transverse elements slideably provided on two endless carriers of the belt that each comprise a laminated set of mutually nested flat and thin metal rings, alternatively denoted bands. This type of drive belt is predominantly used as a means for power transmission between two adjustable pulleys of the well-known continuously variable transmission that is mainly applied in motor vehicles. Another drive belt according to the preamble of claim 1 is known from European patent publication EP1371876A.

In the known drive belt the transverse elements each comprise three main parts, namely an essentially arrowhead-shaped top part, an essentially trapezoidal bottom part and an essentially oblong pillar part of relatively limited axial dimension, i.e. width, which pillar part interconnects the said top and bottom parts. On either side of the pillar part a laterally open slot is defined between the top part and the bottom part for receiving one of the belt's endless carriers. In the bottom part of the transverse elements, i.e. radially inward from the carriers, an axially oriented so-called tilting edge is provided on one or both of the predominantly longitudinally facing main surfaces of the element. This tilting edge or edges, at least effectively, form(-s) the transition between a radially outer part of the transverse element having an essentially constant dimension in longitudinal direction, i.e. thickness, and a radially inner part having a thickness that tapers off in radially inward direction. The tilting edge allows mutually contacting transverse elements in the belt to mutually tilt and the belt to bend and follow a longitudinally curved trajectory. Further, the transverse elements are each provided with a longitudinally protruding stud on one main surface thereof and with a complementary hole in the other, i.e. opposite main surface thereof. In the drive belt, the stud of each of the transverse elements is accommodated with a defined play in the hole of a respectively adjacent transverse element. This combination of a stud and a corresponding hole serves to mutually align the said adjacent transverse elements of the drive belt during operation in the transmission in the axial and the radial directions.

In the above-mentioned European patent publication it is discussed that, due to the fact that in commercially produced transmissions only one conical disc of each pulley is provided axially moveable, whereas the other conical disc is immovably fixed to the shaft of the pulley, the so-called pulley misalignment phenomenon occurs, which means that the V-grooves defined between the discs of the pulleys, wherein the drive belt is located, are slightly axially offset relative to one another in virtually all transmission ratios, i.e. all possible mutual axial positions of the moveable pulley discs. Thus, in most transmission ratios, the drive belt and in particular the endless carriers thereof are not oriented at a right angle relative to, i.e. perpendicular to the axis of rotation of a pulley and, as a result, transverse elements of the drive belt tend to enter a pulley also in an axially off-set position relative to a virtual centerline of the V-groove defined thereby. Just before each transverse element is taken up in the pulley V-groove it will thus first arrive into contact, i.e. impact with only one of the pulley discs and thereby receive an axially oriented impulse. Such impact and impulse are considered undesirable, because kinetic energy is thereby lost and noise is generated.

From the above European document it is known to limit the said impact and the detrimental effects thereof by limiting a play in the axial direction between the pillar part of the transverse elements and the endless carriers, such that the carriers axially align or position the transverse elements relative to (the centerline of) pulley V-groove even before they are taken up therein. A minimum axial play between the endless carriers and the said pillar part remains, however, always required to avoid that the carriers would be crushed between a pulley disc and a pillar part and the drive belt could fail.

The above known drive belt design concerns a considerable improvement in terms of the proper and durable functioning of the drive belt and the transmission wherein it is employed. However, in specific conditions during operation of the transmission, undesirably increased vibration levels and even a slightly reduced power transmission efficiency of the transmission were observed even with the above improved drive belt design. These undesirable effects indicated that the transverse elements are still not taken up in the pulley V-groove as smoothly as possible, or at least as desirable, at least not in the said specific operating conditions. It thus came as a surprise to applicant that these effects were especially pronounced in those transmission ratio or ratio's, wherein the pulleys, i.e. the thereby respectively defined V-grooves, are mutually axially aligned and wherein the drive belt thus traverses between the pulleys at a right angle relative to the axis of rotation thereof.

The present invention aims to provide an explanation for the above surprising, even seemingly conflicting observations and to base an alternatively defined and improved drive belt design thereon. Preferably, the said undesirable effects would be completely avoided by the new drive belt design.

According to the invention, the above objects are realized, at least in part, by a drive belt having the features of the following claim 1. The drive belt according to the invention provides that the endless carriers are biased, i.e. are urged during operation towards the pillar part of the transverse elements, such that these are guided, i.e. are axially aligned thereby, especially when the pulley V-grooves are mutually axially aligned.

It has been observed by Applicant that in the known belt, because of the said minimum required axial play between the endless carriers and the said pillar part of the transverse elements thereof, the latter elements can -and indeed do- enter a pulley in a slightly axially off-set position, also when the pulley V-grooves are in perfect alignment. Accordingly, an individual transverse element will usually still hit, i.e. impact with one pulley disc before the other and receive an axially oriented impulse thereby, which causes the respective element to not only axially displace towards the centerline of the pulley V-groove as required to be taken up therein, but to also rotate about a virtual, predominantly longitudinally oriented axis through the said stud thereof. It is believed that it is this rotation of the transverse element that hampers it from being taken up ultimately smoothly in the pulley V-groove, since such rotation first needs to be removed again. It could thus be said that a mechanical resistance has to be overcome as the transverse elements enter between the discs of a pulley, which resistance reveals itself in the form of a small but notional reduction of the power transmission efficiency.

Thus, according to the invention, when -further- limiting the force of the impact between the transverse elements and the pulley discs by axially centering the elements also when the pulley V-grooves as such are axially aligned, the unwanted rotation of the transverse elements can be suppressed and the transmission efficiency can be improved. This measure of axially centering the transverse elements within the drive belt is exactly what is realized by the additional design feature of the urging means according to claim 1. Since both endless carriers are biased towards the pillar part of the transverse elements, the respective axial position of the carriers is determined by the elements that are located between the discs of the pulleys and are held in an axially position thereby. In turn, the transverse elements located in-between the pulleys are held centrally in the drive belt by means of the endless carriers, since their respective pillar part is held with a minimal amount of axial play in-between the carriers.

It is remarked that the said biasing or urging of the endless carriers can be effected in any one of at least two known manners. Firstly, as is described in principle in the United States patent No. 4,610,648, the surface parts of the bottom part of the transverse elements that form the radial inside surface of the slots and that respectively bear against the radial inside surface of a respective endless carrier, can be provided with a convex curvature or crowning having an apex that is placed off-center. Secondly, as is described in principle in the Japanese patent application JP-A-61/0524430, the said radial inside surface of the endless carriers can be provided with a surface profile of grooves and/or ridges that are oriented at an appropriately chosen acute angle relative to the longitudinal direction of the carrier.

It should be noted that it is already known in principle from the above-mentioned document US-4,610,648 to bias or urge the endless carriers towards the central pillar parts of the transverse elements during operation, however, only in relation to a similar, but significantly different drive belt design. According to US-4,610,648 such measure would prevent that the endless carriers bear against and wear out the pulley discs. However, in the art of the present, all metal drive belt specifically incorporating all of the above-mentioned known design features, this latter known measure has to Applicant's knowledge never been applied in practice. Actually, in the present type drive belt, the sliding contact between the individual bands of the endless carriers and the pillar part of the transverse elements is considered more critical in terms of wear and tear than such contact with the pulley discs. Therefore and in the absence of any previously known advantage attributed to biasing the endless carriers towards the said pillar part, all commercially applied drive belts of the present type are without exception designed such that the carriers are urged either towards the center of the carrier receiving slot of the transverse elements or towards the outside thereof, i.e. towards the pulley discs. Indeed, this established and exclusively practiced drive belt design has been described in several publications in the past couple of decades, thus effectively since its first commercial application around 1987 and in all successful applications thereafter.

In respect of US-4,610,648 it should further be noted that the problem underlying the present invention, namely that of the rotation of the transverse element about the stud thereof at entering a pulley, does not occur in the drive belt design disclosed therein, because the transverse elements thereof are not provided with a stud and a complementary hole.

Based on the above-explained observations and insights, a further drive belt design is presently provided for likewise realizing the said objectives of the invention at least in part, which second basic design includes the features of the following claim 2. This second drive belt design according to the invention provides that during operation only one of the endless carriers is biased towards the pillar part of the transverse elements, whereas the respective other one endless carrier is urged away from the said pillar part. In this latter drive belt design a minimum amount of said axial play will still be present between the pillar part of the transverse elements and the carriers during operation, however, the maximum axial offset of the transverse elements is only approximately half that of the known, conventionally designed drive belt. Accordingly, the said impact of an individual transverse element hitting a pulley disc is reduced considerably, although not as much as in the above, first-mentioned drive belt design according to the invention. However, the present second drive belt design according to the invention does provide the additional advantage of the pillar part being loaded to a favorably lesser extent, since only one of the endless carriers bears against it during operation. Moreover, it is believed that in comparison with the said first-mentioned design this second drive belt design according to the invention provides a better axial positioning and guidance of the transverse elements towards the pulley V-grooves in other transmission ratio's wherein the pulley V-grooves are in a mutually axially offset position. Also, the asymmetric nature of the transmission in terms of its typical design with one axially moveable and one axially fixed disc, as well as of a different deformation of these discs during operation, favors the similarly asymmetric drive belt design of claim 2.

The invention will now be elucidated further with reference to the figures enclosed.
Figure 1 is a schematic representation in a perspective view of a known continuously variable transmission provided with a drive belt and two pulleys.
Figure 2 provides a cross section of the known drive belt oriented in the longitudinal direction thereof providing a frontal view of a transverse element thereof.
Figure 3 is a schematic cross sectional view of the drive belt mounted and operating in the transmission between the pulleys thereof.
Figures 4A and 4B schematically illustrate a problem associated with the pulley V-groove entry of a transverse element that is axially off-set relative to the centerline of such V-groove.
Figures 5A and 5B are schematic cross sectional views of a first and a second embodiment of the drive belt according to the invention respectively.
Figures 6 and 7 each illustrate a separate option for urging an endless carrier of the current drive belt in a desired axial direction.

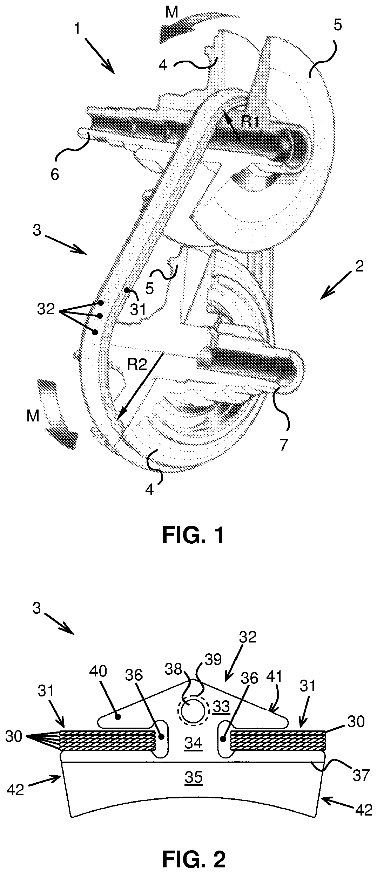

Figure 1 shows the central parts of a known continuously variable transmission that is commonly applied in the drive-line of motor vehicles between the engine and the drive wheels thereof. The transmission comprises two pulleys 1, 2, each provided with two pulley discs 4, 5, between which a so-called pushbelt-type drive belt 3 is present for transmitting a rotational movement M and an accompanying torque from one pulley 1, 2 to the other 2, 1. The pulley discs 4, 5 are shaped generally conical and one pulley disc 4 is incorporated in the transmission axially moveable along a respective pulley shaft 6, 7 on which both discs 4, 5 are placed. The transmission normally also comprises activation means that impose on the said one movable disc 4 an axially oriented clamping force directed towards the respective other axially fixed pulley disc 5 such that the drive belt 3 is clamped there between. A geometric transmission ratio of the transmission is determined by the quotient of an effective contact radius R2 of the drive belt 3 at the driven pulley 2 and an effective contact radius R1 of the drive belt 3 at the driving pulley 1, which may be varied continuously in range of values.

The drive belt 3 comprises two endless carriers 31 and a plurality of several hundred relatively thin transverse elements 32 that are provided on the carrier 31 movable along the longitudinal direction thereof and oriented predominantly transversely thereto. The transverse elements 32 take-up the said clamping force, such that at rotation of a driving pulley 1, friction between the discs 4, 5 and the drive belt 3, causes the elements 32 to be thrust in the said direction of movement M from the said driving pulley 1 to a driven pulley 2 and back again, thereby being guided and supported by the endless carrier 31.

Figure 2 provides a cross section of the known drive belt 3, which cross section is oriented in the longitudinal direction thereof. In figure 2 the transverse element 32 of the drive belt 3 is shown in a frontal view. The element 32 comprises three main parts, namely an essentially arrowhead-shaped top part 33, an essentially trapezoidal bottom part 35 and an essentially oblong pillar part 34 of relatively limited width that interconnects the said top and bottom parts 33, 35. The transverse elements 32 are incorporated in the drive belt 3 mounted on the endless carriers 31 thereof, which are each composed of a laminated set of mutually nested flat and thin metal rings 30 that are nested one around the other in the radial direction. On either side of the pillar part 34, a laterally open slot 36 is defined between the top part 33 and the bottom part 35 for receiving one of the belt's endless carriers 31. The bottom part 35 itself is provided with lateral contact faces 42 that arrive into frictional contact with respective pulley discs 4, 5, which contact faces 42 are mutually oriented at an acute angle that essentially coincides with the angle of divergence of the conical discs 4, 5 of the pulleys 1,2, i.e. the V-groove angle.

Further, an longitudinally protruding stud 38 is provided on a front main face 40 of the transverse element 32, which stud 38 is to be accommodated in a hole 39 provided in a rear main face 41 of an adjacent transverse element 32. The stud 38 and hole 39 are provided to mutually align adjacent transverse elements 32 of the drive belt 3 transversely to its longitudinal direction during operation in the transmission. At the bottom part 35 of the transverse elements 32 its thickness tapers-off, at least effectively, in radial inward direction so as to allow adjacent elements 32 to mutually tilt about the axial direction when clamped between the discs 4, 5 of the pulleys 1, 2. A so-called tilting edge 37 defines the transition between such tapered radially inner part of the respective transverse elements 32 and the radially outer part thereof having an comparatively constant thickness. In this case, the tilting edge 37 is provided as a curved transition surface part of the front main face 40 of the transverse element 32.

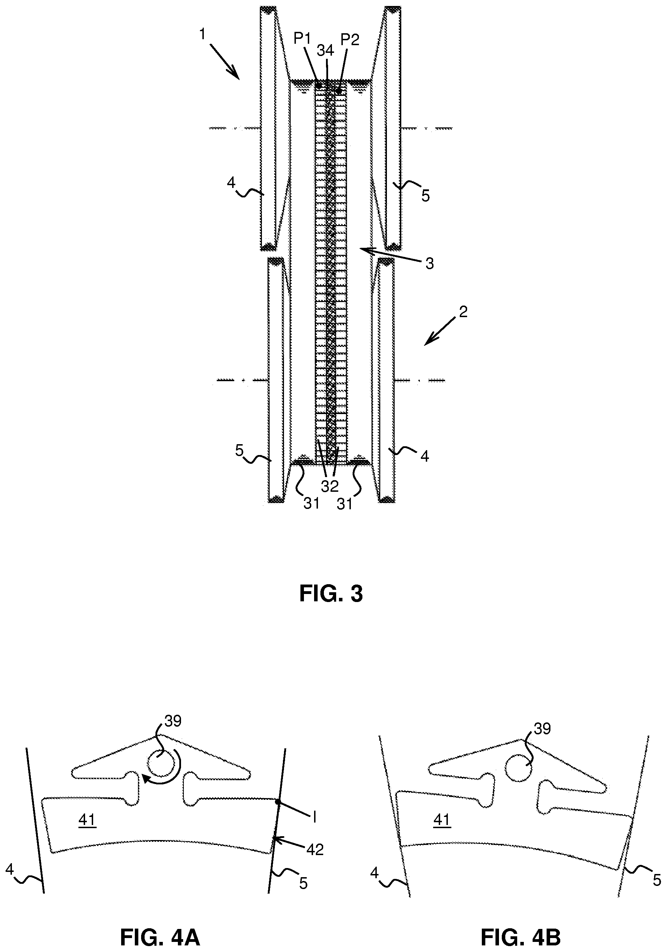

Figure 3 is a schematic cross sectional view of the drive belt 3 mounted in the transmission between the pulleys 1 and 2 thereof, which cross section intersects with the pillar part 34 of the transverse elements 32 just radial outward from the endless carriers 31. The transmission is shown in an position of zero pulley misalignment, which means that the center of the V-grooves defined between the discs 4, 5 of the respective pulleys 1,2 coincide in the axial direction. In this position the drive belt 3 and the endless carriers 31 thereof are oriented at a right angle relative to the rotational axes of the pulleys 1, 2, whereas the transverse elements 32 are oriented essentially in parallel therewith.

In the cross section of figure 3 it is shown that the endless carriers 31 are both in contact with the pulley discs 4, 5, which is a design feature of the known drive belt 3. In the known drive belt 3, the endless carriers 31 and the transverse elements 32 are known to each move at its own circumferential, i.e. rotational speed during operation. When a power is transmitted by the drive belt 3, the speed of the endless carrier 31 exceeds that of the transverse elements 32 such that a sliding contact exists there between. In the known, all metal drive belt 3, the endless carriers 31 are biased towards the pulley discs 4,5 in the said sliding contact, by providing the surface parts of the bottom part 35 of the transverse elements 32, which form the radial inside surface of the slots 36 and which respectively bear against the radial inside surface of a respective endless carrier 31, in the axial direction with a slight convex curvature having an apex that is disposed off-center towards the lateral contact faces 42 of elements 32. As result, an axial play P exists between each endless carrier 31 and the said pillar part 34, so that the transverse elements 32 that are located in-between the pulleys 1, 2 are able to move axially away from the said centerline, albeit limited by the axial play defined between each pair of adjacent elements 32 by the interacting stud 38 and hole 39 thereof.

Still, even such relatively small axial offset of the transverse elements 32 causes them to impact at a position I on a respective lateral contact face 42 thereof with one pulley disc 4, 5, e.g. the axially fixed disc 5, before the other and receive an axially oriented impulse thereby, as schematically indicated in figure 4A that provides a view of the rear main face 41 of the transverse element 32 in the direction of movement thereof during operation. This impact causes the respective element 32 to not only axially displace towards the centerline of the pulley V-groove, but also to rotate (arrow in figure 4A) about a virtual, predominantly longitudinally oriented axis that coincides with the said stud 38 and hole 39 thereof, such that it can enter between the pulley discs 4, 5 in a skewed orientation, as is indicated to an exaggerated extent in figure 4B. It is believed that it is this rotation and resulting skewed entering in the pulley V-groove of the transverse element 32 that causes or at least significantly contribute to the observed undesirably increased vibration levels and slightly reduced power transmission efficiency of the transmission in the said position of zero pulley misalignment thereof.

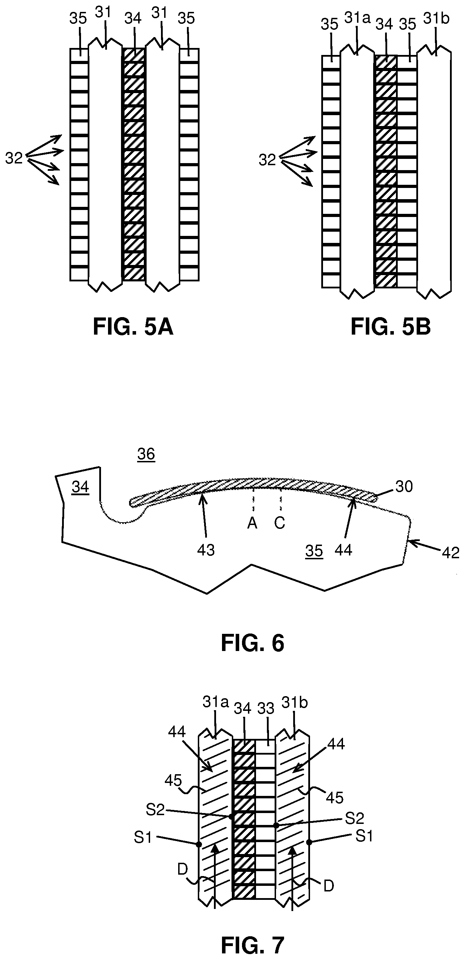

As a solution to the above observed problem and based on the cause analysis thereof, the invention proposes to design the drive belt 3 such that the endless carriers 31 are biased towards the pillar part 34 of the transverse elements 32 by means of urging means, which first embodiment of the invention is illustrated in figure 5A hereof. Figure 5A provides a cross-section of the drive belt 3 similar to that of figure 3, however only for a small section thereof. It is immediately clear from this figure 5A that by biasing the endless carriers 31 toward the pillar part 34 of the transverse elements 32, the axial play there between has been removed completely. During operation of the transmission the transverse elements 32 will thus be axially aligned centrally in the drive belt 3 between the endless carriers 31 thereof. The above-mentioned one sided impact of the transverse elements 32 with a pulley disc 4, 5 and the unwanted rotation as a result thereof will thus be suppressed and transmission efficiency improved.

In a second embodiment of the drive belt 3 according to the invention, which is illustrated in the cross section of figure 5B in a manner similar to that of figure 5A, the drive belt 3 incorporates urging means that bias one of the endless carriers 31a towards the pillar part 34 of the transverse elements 32 and that bias the respective other one carrier 31b axially away from the said pillar part 34. This second embodiment of the drive belt 3 according to the invention may be preferred over the said first embodiment thereof, because the pillar part 34 of the transverse elements 32 are thereby loaded to a favorably lesser extent, since only said one endless carrier 31a bear against it during operation. Moreover, it is believed that in comparison with the said first embodiment this second embodiment of the drive belt 3 according to the invention provides a better axial positioning and guidance of the transverse elements 32 towards the pulley V-grooves in the other transmission ratio's wherein the pulley V-grooves are in a mutually axially offset position.

For completeness sake, it is recalled that the said biasing of the endless carriers 31 may be effected during operation of the transmission by an axially oriented force, or at least a force component being exerted thereon, thus urging the carriers 31 in a desired axial direction, i.e. either towards the said pillar part 34 of the transverse elements 32 or away there from towards a respective lateral contact face 42 thereof. Two known designs of the urging means that effect such a biasing force on the endless carriers 31 rely on the sliding contact the exists between the carriers 31 and the transverse elements 32 during operation of the drive belt 3, wherein the longitudinal or circumferential speed of the endless carrier 31 typically exceeds that of the transverse elements 32, either creating such biasing force mechanically or hydro-dynamically.

A first, mechanically functioning urging means for urging an endless carrier 31 in a desired axial direction, i.e. either towards or away form the pillar part 34 of a transverse element 32 is illustrated in figure 6 in a cross section of the drive belt 3 similar to that of figure 3. In figure 6 a support surface part 43 of the bottom part 35 of the transverse elements 32 that forms the radial inside surface of the slot 36 and that bears against and supports the radial inside surface 44 of the radial inner ring 30 of a respective endless carrier 31 is provided with a convex curvature, which in practice will be far less pronounced as shown in figure 6. The apex A of this a convex curvature is disposed off-center C relative to the axial or width dimension of the said support surface part 43, either being located more towards the pillar part 34 of the transverse element 32 (as illustrated in figure 6) for biasing the respective endless carrier 31 towards such pillar part 34, or more towards the respective lateral contact face 42 of the transverse element 32 (not illustrated) for biasing the respective endless carrier 31 away from such pillar part 34.

A second, predominantly hydro-dynamic functioning urging means for urging an endless carrier 31 in a desired axial direction, i.e. either towards or away form the pillar part 34 of a transverse element 32 is illustrated in figure 7 in a cross section of the drive belt 3. In figure 7 a bottom, i.e. radially outward directed view of the endless carriers 31a and 31b is provided, thus revealing the radial inside surface 44 thereof. The radial inside surface 44 of the endless carriers 31a, 31b, i.e. of the radially innermost ring 30 thereof, is provided with a surface profile comprising ridges 45 and/or grooves (not shown) that are oriented at an acute angle relative to the longitudinal direction of the carriers 31a, 31b. Viewed in a direction D of the movement of the endless carriers 31a, 31b relative to the transverse elements 32 during operation, these ridges 45 either start on the side S1 of the carrier 31a that is closest to a respective lateral contact face 42 of the elements 32 for biasing the respective carrier 31 towards the pillar part 34 of the elements 32, or they start on the side S2 of the carrier 31b that is closest to such pillar part 34 for biasing the respective carrier 31b away from such pillar part 34.

## Claims

1. Drive belt (3) for power transmission between two adjustable pulleys (1, 2) of a continuously variable transmission comprising a number of relatively thin metal transverse elements (32) slideably provided on two endless carriers (31; 31a, 31b) that each comprise a laminated set of mutually nested flat and thin metal rings (30), which transverse elements (32) comprise a top part (33) and a bottom part (35), mutually connected by a pillar part (34) of the transverse element (32), with a laterally open slot (36) being defined on either axial side of the pillar part (34) between the said top bottom parts (33, 35) for respectively receiving one of the endless carriers (31; 31a, 31b), and which transverse elements (32) are provided with longitudinally protruding stud (38) on a front main surface thereof (40) and with a complementary hole (39) in an opposite, rear main surface (41) thereof, the drive belt being provided with urging means for providing the endless carriers (31; 31a, 31b) with at least a tendency to move in axial direction towards the pillar part (34) of the transverse element (32) during rotation of the belt (3) in the transmission, **characterized in that** the urging means (43; 44) comprise a radially inside surfaces (44) of the endless carriers (31; 31a, 31b), which radially inside surfaces (44) bear against a support surface part (43) of the bottom part (35) of the transverse elements (32) and which radially inside surfaces (44) are provided with a surface profile of ridges (45) and/or grooves that are oriented at an acute angle relative to a direction of relative movement (D) during operation between the endless carriers (31; 31a, 31b) and the transverse elements (32) and that start in such direction of relative movement (D) either on a first side (S1) of a respective endless carrier (31; 31a) that is closest to a respective lateral side of the transverse element (32) for urging the respective endless carrier (31; 31a) towards the pillar part (34) of the transverse elements (32), or on a second side (S2) of a respective endless carrier (31; 31b) that is closest to such pillar part (34) for urging the respective endless carrier (31; 31b) away from such pillar part (34).

2. Drive belt (3) for power transmission between two adjustable pulleys (1, 2) of a continuously variable transmission comprising a number of relatively thin metal transverse elements (32) slideably provided on two endless carriers (31; 31a, 31b) that each comprise a laminated set of mutually nested flat and thin metal rings (30), which transverse elements (32) comprise a top part (33) and a bottom part (35) mutually connected by a pillar part (34) of the transverse element (32), with a laterally open slot (36) being defined on either axial side of the pillar part (34) between the said top bottom parts (33, 35) for respectively receiving one of the endless carriers (31; 31a, 31b), and which transverse elements (32) are provided with longitudinally protruding stud (38) on a front main surface thereof (40) and with a complementary hole (39) in an opposite, rear main surface (41) thereof, **characterized in that**, the drive belt is provided with urging means for providing one (31a) of the endless carriers (31; 31a, 31b) with at least a tendency to move in axial direction towards the pillar part (34) of the transverse element (32) and for providing the respective other one (31b) of the endless carriers (31; 31a, 31b) with at least a tendency to move in axial direction away from the pillar part (34) during rotation of the belt (3) in the transmission.

3. The drive belt (3) according to claim 1 or 2, **characterized in that**, the urging means (43, 44) comprise a support surface part (43) of the bottom part (35) of the transverse elements (32), which support surface part (43) forms the radial inside surface of the slots (36) and bears against a radial inside surface (44) of a respective endless carrier (31; 31a; 31b) and which support surface part (43) is provided with a convex curvature having an apex (A) that is disposed off-center (C) relative to the axial or width dimension thereof, the apex (A) being located either more towards the pillar part (34) of the transverse element (32) for urging the respective endless carrier (31; 31a) towards such pillar part (34), or more towards a respective lateral side of the transverse element (32) for urging the respective endless carrier (31; 31b) away from such pillar part (34).

4. The drive belt (3) according to claim 2 or 3, **characterized in that**, the urging means (43; 44) comprise a radially inside surfaces (44) of the endless carriers (31; 31a, 31b), which radially inside surfaces (44) bear against a support surface part (43) of the bottom part (35) of the transverse elements (32) and which radially inside surfaces (44) are provided with a surface profile of ridges (45) and/or grooves that are oriented at an acute angle relative to a direction of relative movement (D) during operation between the endless carriers (31; 31a, 31b) and the transverse elements (32) and that start in such direction of relative movement (D) either on a first side (S1) of a respective endless carrier (31; 31a) that is closest to a respective lateral side of the transverse element (32) for urging the respective endless carrier (31; 31a) towards the pillar part (34) of the transverse elements (32), or on a second side (S2) of a respective endless carrier (31; 31b) that is closest to such pillar part (34) for urging the respective endless carrier (31; 31b) away from such pillar part (34).

## Patentansprüche

1. Antriebsriemen (3) zur Kraftübertragung zwischen zwei einstellbaren Riemenscheiben (1, 2) eines stufenloses Getriebes, umfassend eine Anzahl von relativ dünnen quer verlaufenden Metallelementen (32), die auf verschiebbare Weise an zwei endlosen Trägern (31; 31a, 31b) vorgesehen sind, die jeweils einen beschichteten Satz von miteinander verschachtelten flachen und dünnen Metallringen (30) umfassen, wobei die quer verlaufenden Elemente (32) einen oberen Teil (33) und einen unteren Teil (35) umfassen, die gegenseitig durch einen Säulenteil (34) des quer verlaufenden Elements (32) verbunden sind, wobei ein seitlich offener Schlitz (36) auf beiden axialen Seiten des Säulenteils (34) zwischen dem oberen und dem unteren Teil (33, 35) zum jeweiligen Aufnehmen eines der endlosen Träger (31; 31a, 31b) festgelegt ist, und wobei die quer verlaufenden Elemente (32) mit einem längs vorstehenden Zapfen (38) auf einer vorderen Hauptfläche (40) derselben und mit einem ergänzenden Loch (39) in einer gegenüberliegenden hinteren Hauptfläche (41) derselben versehen sind, wobei der Antriebsriemen mit zwingenden Mitteln versehen ist, um die endlosen Träger (31; 31a, 31b) mit wenigstens einer Neigung zu versehen, sich in axialer Richtung zu dem Säulenteil (34) des quer verlaufenden Elements (32) während der Drehung des Riemens (3) in dem Getriebe zu bewegen, **dadurch gekennzeichnet, dass** die zwingenden Mittel (43; 44) radial innere Flächen (44) der endlosen Träger (31; 31a, 31b) umfassen, wobei die radial inneren Flächen (44) an einem Stützflächenteil (43) des unteren Teils (35) der quer verlaufenden Elemente (32) anliegen und wobei die radial inneren Flächen (44) mit einem Flächenprofil aus Rippen (45) und/oder Rillen versehen sind, die in einem spitzen Winkel relativ zu einer Richtung einer relativen Bewegung (D) im Betrieb zwischen den endlosen Trägern (31; 31a, 31b) und den quer verlaufenden Elementen (32) ausgerichtet sind und die in der Richtung einer relativen Bewegung (D) entweder auf einer ersten Seite (S1) eines entsprechenden endlosen Trägers (31; 31a), der sich am nächsten zu einer entsprechenden Querseite des quer verlaufenden Elements (32) befindet, um den entsprechenden endlosen Träger (31; 31a) in Richtung zu dem Säulenteil (34) der quer verlaufenden Elemente (32) zu zwingen, oder auf einer zweiten Seite (S2) eines entsprechenden endlosen Trägers (31; 31b), der sich am nächsten zu dem Säulenteil (34) befindet, um den entsprechenden endlosen Träger (31; 31b) weg von dem Säulenteil (34) zu zwingen, beginnt.

2. Antriebsriemen (3) zur Kraftübertragung zwischen zwei einstellbaren Riemenscheiben (1, 2) eines stufenloses Getriebes, umfassend eine Anzahl von relativ dünnen quer verlaufenden Metallelementen (32), die auf verschiebbare Weise an zwei endlosen Trägern (31; 31a, 31b) vorgesehen sind, die jeweils einen beschichteten Satz von miteinander verschachtelten flachen und dünnen Metallringen (30) umfassen, wobei die quer verlaufenden Elemente (32) einen oberen Teil (33) und einen unteren Teil (35) umfassen, die gegenseitig durch einen Säulenteil (34) des quer verlaufenden Elements (32) verbunden sind, wobei ein seitlich offener Schlitz (36) auf beiden axialen Seiten des Säulenteils (34) zwischen dem oberen und dem unteren Teil (33, 35) zum jeweiligen Aufnehmen eines der endlosen Träger (31; 31a, 31b) festgelegt ist, und wobei die quer verlaufenden Elemente (32) mit einem längs vorstehenden Zapfen (38) auf einer vorderen Hauptfläche (40) derselben und mit einem ergänzenden Loch (39) in einer gegenüberliegenden hinteren Hauptfläche (41) derselben versehen sind, **dadurch gekennzeichnet, dass** der Antriebsriemen mit zwingenden Mitteln versehen ist, um einen (31a) der endlosen Träger (31; 31a, 31b) mit wenigstens einer Neigung zu versehen, sich in axialer Richtung zu dem Säulenteil (34) des quer verlaufenden Elements (32) zu bewegen, und um den entsprechenden anderen (31b) der endlosen Träger (31; 31a, 31b) mit wenigstens einer Neigung zu versehen, sich während der Drehung des Riemens (3) in dem Getriebe in axialer Richtung weg von dem Säulenteil (34) zu bewegen.

3. Antriebsriemen (3) nach Anspruch 1 oder 2, **dadurch gekennzeichnet, dass** die zwingenden Mittel (43, 44) einen Stützflächenteil (43) des unteren Teils (35) der quer verlaufenden Elemente (32) umfassen, wobei der Stützflächenteil (43) die radial innere Fläche der Schlitze (36) bildet und gegen eine radial innere Fläche (44) eines entsprechenden endlosen Trägers (31; 31a; 31b) anliegt und wobei der Stützflächenteil (43) mit einer konvexen Krümmung versehen ist, die einen Scheitelpunkt (A) aufweist, der außermittig (C) relativ zu der axialen Abmessung oder der Breitenabmessung derselben angeordnet ist, wobei sich der Scheitelpunkt (A) entweder mehr in Richtung zu dem Säulenteil (34) des quer verlaufenden Elements (32) befindet, um den entsprechenden endlosen Träger (31; 31a) zu dem Säulenteil (34) zu zwingen, oder sich mehr in Richtung zu einer entsprechenden Querseite des quer verlaufenden Elements (32) befindet, um den entsprechenden endlosen Träger (31; 31b) weg von dem Säulenteil (34) zu zwingen.

4. Antriebsriemen (3) nach Anspruch 2 oder 3, **dadurch gekennzeichnet, dass** die zwingenden Mittel (43; 44) radial innere Flächen (44) der endlosen Träger (31; 31a, 31b) umfassen, wobei die radial inneren Flächen (44) an einem Stützflächenteil (43) des unteren Teils (35) der quer verlaufenden Elemente (32) anliegen und wobei die radial inneren Flächen (44) mit einem Flächenprofil aus Rippen (45) und/oder Rillen versehen sind, die in einem spitzen Winkel relativ zu einer Richtung einer relativen Bewegung (D) im Betrieb zwischen den endlosen Trägern (31; 31a, 31b) und den quer verlaufenden Elementen (32) ausgerichtet sind und die in der Richtung einer relativen Bewegung (D) entweder auf einer ersten Seite (S1) eines entsprechenden endlosen Trägers (31; 31a), der sich am nächsten zu einer entsprechenden Querseite des quer verlaufenden Elements (32) befindet, um den entsprechenden endlosen Träger (31; 31a) in Richtung zu dem Säulenteil (34) der quer verlaufenden Elemente (32) zu zwingen, oder auf einer zweiten Seite (S2) eines entsprechenden endlosen Trägers (31; 31b), der sich am nächsten zu dem Säulenteil (34) befindet, um den entsprechenden endlosen Träger (31; 31b) weg von dem Säulenteil (34) zu zwingen, beginnt.

## Revendications

1. Courroie d'entraînement (3) pour la transmission de puissance entre deux poulies réglables (1, 2) d'une transmission à variation continue comprenant un certain nombre d'éléments transversaux métalliques (32) relativement minces disposés de manière coulissante sur deux supports sans fin (31 ; 31a, 31b) qui comprennent chacun un ensemble stratifié d'anneaux métalliques plats et minces (30) emboîtés mutuellement, lesdits éléments transversaux (32) comprenant une partie supérieure (33) et une partie inférieure (35), mutuellement reliées par une partie pilier (34) de l'élément transversal (32), une fente (36) latéralement ouverte étant définie sur chaque côté axial de la partie pilier (34) entre lesdites parties supérieure et inférieure (33, 35) pour recevoir respectivement un des supports sans fin (31 ; 31a, 31b), et lesdits éléments transversaux (32) comprenant un goujon (38) longitudinalement en saillie sur une surface principale avant (40) associée et un trou complémentaire (39) dans une surface principale arrière opposée (41) associée, la courroie d'entraînement comprenant un moyen de poussée pour fournir aux supports sans fin (31 ; 31a, 31b) au moins une tendance à se déplacer en direction axiale vers la partie pilier (34) de l'élément transversal (32) pendant la rotation de la courroie (3) dans la transmission, **caractérisée en ce que** le moyen de poussée (43 ; 44) comprend des surfaces radialement intérieures (44) des supports sans fin (31 ; 31a, 31b), lesdites surfaces radialement intérieures (44) reposant radialement contre une partie de surface d'appui (43) de la partie inférieure (35) des éléments transversaux (32) et lesdites surfaces radialement intérieures (44) ayant un profil de surface de nervures (45) et/ou rainures qui sont orientées selon un angle aigu par rapport à une direction de déplacement relatif (D) pendant le fonctionnement entre les supports sans fin (31 ; 31a, 31b) et les éléments transversaux (32) et qui commencent dans ladite direction de mouvement relatif (D) soit sur un premier côté (S1) d'un support sans fin (31 ; 31a) respectif qui est le plus proche d'un côté latéral respectif de l'élément transversal (32) pour pousser le support sans fin (31 ; 31a) respectif vers la partie pilier (34) des éléments transversaux (32), soit sur un second côté (S2) d'un support sans fin (31; 31b) respectif qui est le plus proche de ladite partie pilier (34) pour pousser le support sans fin (31; 31b) respectif à l'opposé de ladite partie pilier (34).

2. Courroie d'entraînement (3) pour la transmission de puissance entre deux poulies réglables (1, 2) d'une transmission à variation continue comprenant un certain nombre d'éléments transversaux métalliques (32) relativement minces disposés de manière coulissante sur deux supports sans fin (31 ; 31a, 31b) qui comprennent chacun un ensemble stratifié d'anneaux métalliques plats et minces (30) emboîtés mutuellement, lesdits éléments transversaux (32) comprenant une partie supérieure (33) et une partie inférieure (35) mutuellement reliées par une partie pilier (34) de l'élément transversal (32), une fente (36) latéralement ouverte étant définie sur chaque côté axial de la partie pilier (34) entre lesdites parties supérieure et inférieure (33, 35) pour recevoir respectivement un des supports sans fin (31 ; 31a, 31b), et lesdits éléments transversaux (32) comprenant un goujon (38) longitudinalement en saillie sur une surface principale avant (40) associée et un trou complémentaire (39) dans une surface principale arrière opposée (41) associée, **caractérisée en ce que**, la courroie d'entraînement comprend un moyen de poussée pour fournir à l'un (31a) des supports sans fin (31 ; 31a, 31 b) au moins une tendance à se déplacer dans la direction axiale vers la partie pilier (34) de l'élément transversal (32) et pour fournir à l'autre (31b) des supports sans fin (31 ; 31a, 31b) respectif au moins une tendance à se déplacer dans la direction axiale à l'opposé de la partie pilier (34) pendant la rotation de la courroie (3) dans la transmission.

3. Courroie d'entraînement (3) selon la revendication 1 ou 2, **caractérisée en ce que** le moyen de poussée (43, 44) comprend une partie de surface d'appui (43) de la partie inférieure (35) des éléments transversaux (32), ladite partie de surface d'appui (43) formant la surface intérieure radiale des fentes (36) et reposant contre une surface intérieure radiale (44) d'un support sans fin (31 ; 31a ; 31b) respectif et ladite partie de surface d'appui (43) comprenant une courbure convexe ayant un sommet (A) qui est disposé excentré (C) par rapport à sa dimension axiale ou de largeur, le sommet (A) étant situé soit plus vers la partie pilier (34) de l'élément transversal (32) pour pousser le support sans fin (31 ; 31a) respectif vers ladite partie pilier (34), soit plus vers un côté latéral respectif de l'élément transversal (32) pour pousser le support sans fin (31; 31b) respectif à l'opposé de ladite partie pilier (34).

4. Courroie d'entraînement (3) selon la revendication 2 ou 3, **caractérisée en ce que** le moyen de poussée (43 ; 44) comprend des surfaces radialement intérieures (44) des supports sans fin (31 ; 31a, 31b), lesdites surfaces radialement intérieures (44) reposant contre une partie de surface d'appui (43) de la partie inférieure (35) des éléments transversaux (32) et lesdites surfaces radialement intérieures (44) ayant un profil de surface de rainures (45) et/ou nervures qui sont orientées selon un angle aigu par rapport à une direction de mouvement relatif (D) pendant le fonctionnement entre les supports sans fin (31 ; 31a, 31b) et les éléments transversaux (32) et qui commencent dans ladite direction de mouvement relatif (D) soit sur un premier côté (S1) d'un support sans fin (31 ; 31a) respectif qui est le plus proche d'un côté latéral respectif de l'élément transversal (32) pour pousser le support sans fin (31 ; 31a) respectif vers la partie pilier (34) des éléments transversaux (32), soit sur un second côté (S2) d'un support sans fin (31 ; 31b) respectif qui est le plus proche de ladite partie pilier (34) pour pousser le support sans fin (31; 31b) respectif à l'opposé de ladite partie pilier (34).
